# EUROPEAN PATENT APPLICATION

(11) **EP 2 099 216 A1**
(43) Date of publication of application: **09.09.2009**
(21) Application number: 08715416.7
(22) Date of filing: 08.04.2008
(51) Int. Cl.: H04N 5/445, H04N 7/18, H04L 12/00

(54) **EQUIPMENT AND MEANS FOR REALIZING IPTV SERVICES USING INTERNET PROTOCOLS**

(30) Priority: 10.04.2007 CN 200710100568; 18.05.2007 CN 200710108514
(71) Applicant: Huawei Technologies Co., Ltd., Longgang District, Shenzhen Guangdong 518129 (CN)
(72) Inventor: ZHU, Wenming, Shenzhen Guangdong Province 518129 (CN); YAN, Jun, Shenzhen Guangdong Province 518129 (CN); WU, Xiangyang, Shenzhen Guangdong Province 518129 (CN); WANG, Feng, Shenzhen Guangdong Province 518129 (CN)
(74) Representative: Pfenning, Meinig & Partner GbR
(86) International application number: PCT/CN2008/070684
(87) International publication number: WO 2008/122245

(57) **Abstract**

Systems, apparatuses, and methods for implementing IPTV service are disclosed according to the present invention. In particular, a user equipment initiates an IPTV service request to an IPTV application subsystem in an IMS session. The IPTV application subsystem acquires content description from a service selection function entity according to the IPTV service request, and enables a multimedia delivery subsystem to provide content to the user equipment based on the acquired content description. According to the present invention, a content description function entity is provided in the system. The content description function entity is able to provide content description which may be utilized in the IMS session procedure for the purpose of implementing IPTV service.

## Description

### FIELD OF THE INVENTION

The present invention relates to IPTV technology, and more specifically, to systems, apparatuses, and methods for implementing IPTV service.

### BACKGROUND

IPTV, a new developed service, employs a streaming transmission technique to provide users with multimedia files. Providing users with multimedia files or implementing IPTV service mentioned herein are also referred to as providing content to users. Since multimedia files or contents provided to the users can be played without a complete download, such technique boasts a sound user experience and gains more and more popularity. However, the current IPTV service is realized based mainly on middleware. That is, functions such as content management, user management, system management, content distribution management are all integrated in the middleware. A background system such as a Business Operation Supporting System (BOSS) manages and controls the middleware.

On the other hand, with the development of communication and IT technology, the convergence of Internet and telecommunication network is a trend for the next generation network. That is, the mobile communication network and the fixed communication network will be both based on Internet Protocol using Internet Protocol (IP) technology with a cross link layer transmission media. To meet the increasing needs for IP multimedia applications, the 3^{rd} Generation Partnership Project (3GPP) has introduced IP multimedia subsystem (IMS) with all-IP service network architecture on the basis of packet bearer network. The object is to disguise the user access manner, control openness of the service capability according to customized user profile so as to provide a multimedia communication experience. The IMS, introduced in the 3GPP R5 stage, is a subsystem formed by overlaying a wideband code division multiple access (WCDMA) network with the existing packet switched domain. The packet switched domain serves as an upper layer control signaling and a bearer channel for media delivery. Session Initiation Protocol (SIP) is introduced as a service control protocol. With simplicity, scalability and convenience of the SIP in media convergence, the IMS separates service control and bearer control, and provides rich multimedia services.

Considering the fact that the IMS may also provide users with multimedia services, Telecommunications and Internet converged Services and Protocols for Advanced Networking (TISPAN) organization currently proposes an IMS based IPTV architecture, the purpose of which is to utilize IMS to implement IPTV service. However, the IMS-based IPTV architecture proposed by TISPAN organization is not yet mature enough to come into full application. For example, in the existing IPTV services based on middleware, content description is needed to implement IPTV service. The content description may include a content ID, media property information, service property information, etc. The specific information contained in the content description depends on the specific IPTV service.

Overall, content description is important information in the implementation of IPTV. However, the existing IMS-based IPTV architecture does not involve how to provide and use the content description. Moreover, the implementations of IMS-based IPTV service and middleware-based IPTV are totally different. The method of providing and using content description in terms of the middleware-based IPTV architecture is not applicable to the IMS-based IPTV service architecture. Consequently, it is impossible for the IMS-based IPTV to make use of the content description to realize IPTV service, which affects the resulting effect of IPTV service.

### SUMMARY

Apparatuses and methods are provided according to embodiments of the present invention so that content description during an IMS session can be acquired and thus the IPTV service can be implemented based on the content description.

A technical solution according to one embodiment of the present invention is as follows.

An apparatus for implementing IPTV service includes:
a transceiving unit, configured to interact between a content description function entity and an outside entity;
a processing unit, configured to extract content description from a storage unit according to a content description request message from the transceiving unit, and transmit the extracted content description via the transceiving unit; and
the storage unit , configured to store the content description.

Another technical solution according to one embodiment of the present invention is as follows.

An IPTV service control entity includes:
a service control function module, configured to interact with an IP multimedia subsystem core (Core IMS) during an IMS session, receive an IPTV service request from a user equipment, interact with a content description function module according to the IPTV service request so as to acquire content description, utilize the content description to locate content so as to determine a physical access address of the content, and enable a multimedia subsystem to provide content to the user equipment according to the physical access address of the content; and
the content description function module, configured to provide the content description.

Another technical solution according to one embodiment of the present invention is as follows.

A service selection function entity includes:
a service selection function module, configured to interact with a content description function module to acquire content description, utilize the content description to generate an electronic program guide (EPG), and deliver the generated EPG to a user equipment; and
the content description function module, configured to provide the content description.

Another technical solution according to one embodiment of the present invention is as follows.

A method for implementing IPTV service includes:
receiving, by an IPTV application subsystem, an IPTV service request initiated from a user equipment in an IMS session;
acquiring, by the IPTV application subsystem, content description from a content description function entity according to the IPTV service request, and enabling a multimedia delivery subsystem to provide content to the user equipment based on the acquired content description so as to implement the IPTV service.

Another technical solution according to one embodiment of the present invention is as follows.

A method for implementing IPTV service includes:
receiving, by an IPTV application subsystem, an IPTV service request initiated from a user equipment in an IMS session;
acquiring, by the IPTV application subsystem, content description from a service selection function entity according to the IPTV service request, and enabling a multimedia delivery subsystem to provide content to the user equipment based on the acquired content description so as to implement the IPTV service.

Accordingly, systems, apparatuses, and methods for implementing IPTV service are disclosed according to embodiments of the present invention. Since a content description function entity is provided in a system for implementing IPTV service, the system is able to provide content description which can be used in an IMS session. As such, the IPTV service is achieved, the effect of the IPTV service is improved and the user experience is enhanced.

### BRIEF DESCRIPTION OF THE DRAWINGS

Figure 1 is an illustration of a system where a content description function entity acquires media property information;

Figure 2 is an illustration of a system where a content description function entity acquires content protection description;

Figure 3 is an illustration of a system where a content description function entity acquires a physical access address;

Figure 4 is an illustration of a system where a content description function entity provides content description to a service selection function entity;

Figure 5 is an illustration of a system where a content description function entity provides content protection description;

Figure 6 is an illustration of a system where a content description function entity provides content description for matching with related content;

Figure 7 is an illustration of a system where a content description function entity provides content description to an IPTV service control entity for locating content;

Figure 8 is an illustration of a system where a content description function entity provides content description to an MRBF for locating content;

Figure 9 is an illustration of a system architecture where a content description function entity provides content description for service deployment;

Figure 10 is a block diagram of a system for implementing IPTV service according to a first system embodiment of the present invention;

Figure 11 is a block diagram of a system for implementing IPTV service according to a second system embodiment of the present invention;

Figure 12 is a block diagram of a system for implementing IPTV service according to a third system embodiment of the present invention;

Figure 13 is a block diagram of a system for implementing IPTV service according to a fourth system embodiment of the present invention;

Figure 14 is a block diagram of a system for implementing IPTV service according to a fifth system embodiment of the present invention;

Figure 15 is an internal illustration of a content description function entity;

Figure 16 is a flowchart according to a first method embodiment of the present invention;

Figure 17 is an illustration of a message flow according to a second method embodiment of the present invention;

Figure 18 is an illustration of a message flow according to a third method embodiment of the present invention; and

Figure 19 is an illustration of a message flow according to a fourth method embodiment of the present invention.

### DETAILED DESCRIPTION

The purposes, technical solutions and advantages concerning the embodiments of the present invention will become more readily appreciated by reference to the following description of the embodiments, when taken in conjunction with the accompanying drawings.

In order to be able to utilize content description to implement IPTV service, embodiments of the present invention propose a content description function entity for providing content description. The content description mentioned herein refers to related characteristics of content, including a content ID, media property information and service property information, etc. The content ID is a unique ID for indexing the content, which may be generated by the content description function entity when each piece of content description is published to the content description function entity. The media property information, provided by a content provider, refers to information of the media feature of the content considering the fact that the content itself is a media. The media property information may include location information of a content source, coding and decoding format/file format of a media, compression ratio, brief introduction of a content on demand, description of live channels, content producer/production date, content genre, etc. The service property information, provided by a service operator, refers to related information considering the fact that the content is regarded as a service. The service property information may include purchasing price, playing time, content grade, physical access address after content deployment, content protection description, etc. The content protection description herein may also include information such as whether the content is protected (in protection mode), and the address of a content protection function entity.

In practice, content description may include a combination of one or more of the foregoing information. For instance, the content description may include a content ID, a brief description of content on demand, content purchasing price, playing time. For an another example, if a system for implementing IPTV service can only provide one type of content for the user, the content description may only include media property information and service property information without the content ID. As to which specific information is included in the content description, it can be determined by the users applying the solutions provided by the present invention. Further, the specific information included in the content description may also be dependent on the design of the system for implementing IPTV service. For example, if the system for implementing IPTV service includes a content protection function entity, the content description may include content protection description, providing information regarding whether the content is protected (in protection mode) and the address information of the content protection function entity, etc.

In the present embodiment, no matter what specific information is included in the content description, all of these content descriptions, when used in providing IPTV service, may be provided by a content description entity.

To better illustrate the relationship between the content description entity and other entities in the system for implementing IPTV service, two aspects as to how the content description entity acquires content description and provides content description are described below.

With respect to the content description entity acquiring the content description, if the content description includes media property information, the system for implementing IPTV service may not only need to add a content description function entity, but also a content provision function entity, i.e. a content source.

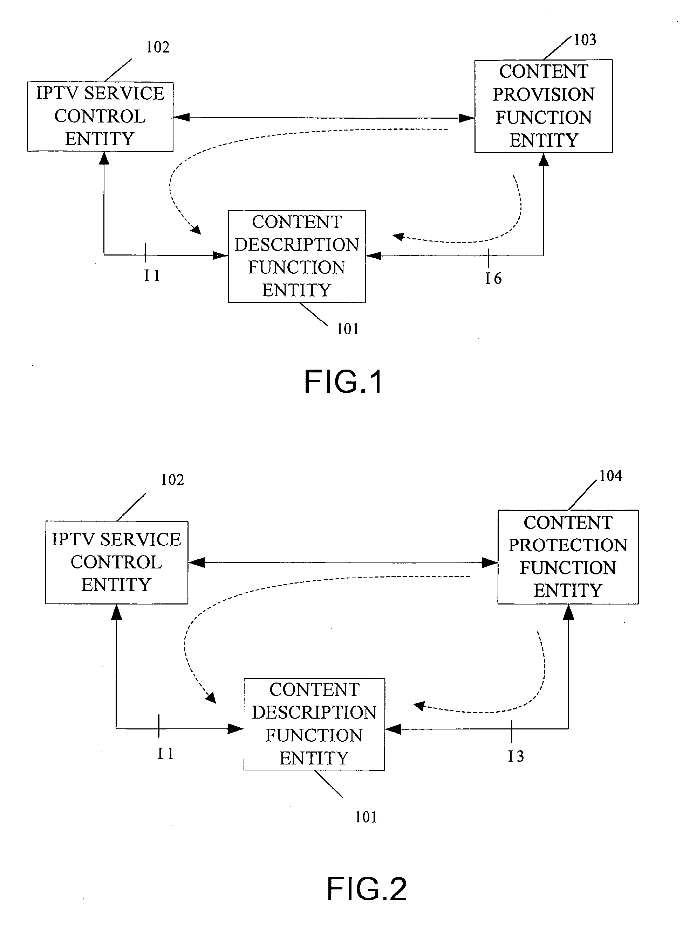

Figure 1 is an illustration of a system architecture where a content description function entity acquires media property information. As illustrated in Figure 1, the system includes a content description function entity 101, an IPTV service control entity 102, a content provision function entity 103. The interface between the content description function entity 101 and the content provider function entity 103 may be an 11 interface. The interface between the content description function entity 101 and the IPTV service control entity 102 may be an I6 interface. These interfaces can be implemented with a Simple Object Access Protocol (SOAP), a Session Initiation Protocol (SIP), a Hypertext Transfer Protocol (HTTP), etc. In practice, I1 and I6 interfaces may also be implemented without SOAP, SIP, or HTTP, provided that the interaction can be achieved.

The content description function entity 101 may store the content description.

The IPTV service control entity 102 is an entity in the IPTV application subsystem, which is mainly responsible for controlling IPTV service. In one embodiment of the present invention, the IPTV service control entity 102 just functions to forward information between the content description function entity 101 and the content provision function entity 103.

The content provision function entity 103 may store the content and publish, via the I6 or I1 interface, the media property information of the content to the content description function entity 101 for storage.

In other words, when the system is required to provide a new content, the content provision function entity 103 which stores the new content may publish, via the I6 or I1 interface, the corresponding media property information to the content description function entity 101 for storage. The media description information herein may include location information of a content source, coding and encoding format/file format of the media, compression ratio, brief introduction of the content on demand, description of live channels, content producer/production date, content genre, etc, or may include a combination of one or more of the foregoing. When the content description function entity 101 receives media property information of a new content, it may generate a content ID for the content and an association between the content ID and the media property information of the new content. The content ID and the media property information herein refer to the content description. If the content description entails service property information, an association among the content ID, media property information and service property information is required. Also, when service property information published from other entities later on is received, such information will be also stored as a part of the content description.

The service property information herein may include purchasing price of the content, playing time, content grade, physical access address after content deployment, content protection description, etc., or may also include a combination of one or more of the foregoing. The service property information may be provided by a service operator, and may be pre-stored in the content description function entity 101, or may be published to the content description function entity 101 by an entity having service property information.

If the service property information includes content protection description, i.e. information regarding whether the content is protected (in protection mode), or the address of a content protection function entity, the system for implementing IPTV service may not only need to provide a content description function entity 101, but also a content protection function entity 104.

Figure 2 is an illustration of a system architecture where a content description function entity acquires content protection description. As illustrated in Figure 2, the system includes a content description function entity 101, an IPTV service control entity 102, a content protection function entity 104. The interface between the content description function entity 101 and IPTV service control entity 102 may still be the I6 interface. The interface between the content protection function entity 104 and the IPTV service control entity 102 may be an I3 interface. These interfaces can be implemented by a SOAP, a SIP, or an HTTP, etc. In practice, I3 interface may also be implemented without SOAP, SIP, or HTTP, provided that interaction function can be achieved.

The content description function entity 101 and the IPTV service control entity 102 are similar to those in Figure 1, which are omitted for clarity. The content protection function entity 104 is configured to store content protection information and directly publish the content protection description describing the content protection status to the content description function entity 10 via the I3 interface, or via the IPTV service control entity 102, which means that the content protection description is published to the content description function entity 101 via I1 interface.

It should be noted that the content protection information stored in the content protection function entity 104 and the content protection description stored in the content description function entity 101 herein are different. The content protection information contains substantive information of the content protection, such as key, copyright object, etc. The content protection description contains information regarding whether the content is protected (in protection mode), the address of the content protection function entity, etc., which are simply description of the content protection status.

Similarly, if the service property information includes a physical access address, the system for implementing IPTV service may not only need to provide a content description function entity 101, but also a service deployment function entity 105.

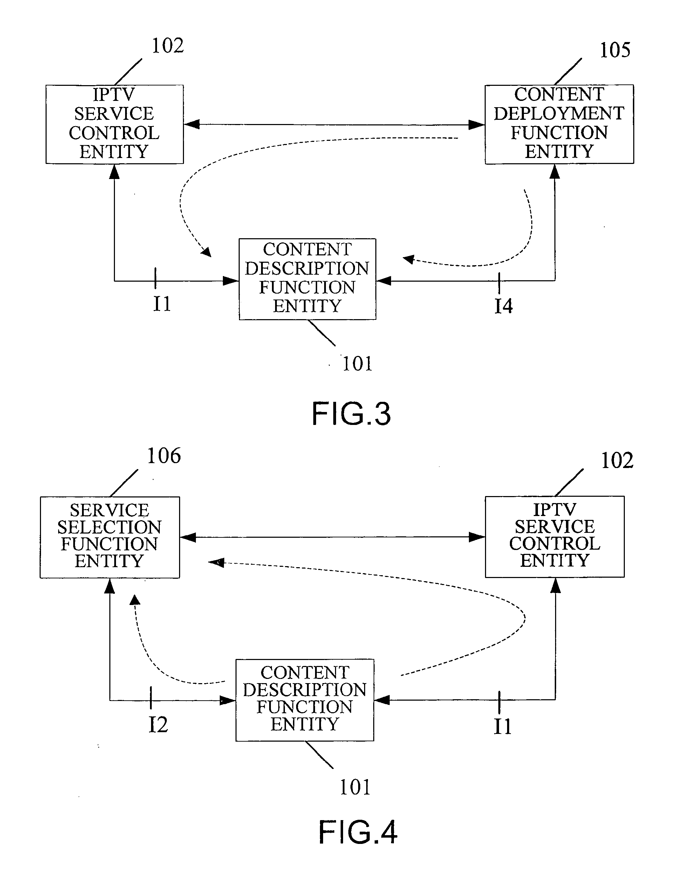

Figure 3 is an illustration of a system architecture where a content description function entity acquires a physical access address. As illustrated in Figure 2, the system includes a content description function entity 101, an IPTV service control entity 102, and a service deployment function entity 105. The interface between the content description function entity 101 and IPTV service control entity 102 may still be the I6 interface. The interface between the content description function entity 101 and the service deployment function entity 105 may be an 14 interface. These interfaces can be implemented by a SOAP, a SIP, or an HTTP, etc. In practice, I4 interface may also be implemented without SOAP, SIP, or HTTP, provided that interaction function can be accomplished.

The content description function entity 101 and the IPTV service control entity 102 are similar to those in Figure 1, which are omitted for clarity. The service deployment function entity 105 is configured to realize the deployment of content in a multimedia delivery subsystem and publish the physical access address after deployment directly to the content description function entity 101 via I4 interface, or via the IPTV service control entity 102, which means that the physical access address after deployment is published to the content description function entity 101 via I1 interface.

The deployment function provided by the service deployment function entity 105 may determine, based on factors such as network status, to provide a physical access address of the content to the user directly where the address may be a network address of a media device or a multiast address. The reason for conducting service deployment is that users relating to the IPTV service may be distributed widely across the system, and the network statuses, link congestion statuses might vary dynamically. The content provision function entity itself only provides original content and it does not deliver the content directly to the users. In other words, in order to ensure users with a good IPTV service quality, it is necessary to determine which physical access addresses can be delivered directly to the user, i.e. making a deployment strategy. After the deployment strategy is made, the service deployment function entity 105 may acquire physical access address(s) which can be delivered to the user. The physical access address(s) can be one or more physical access addresses. As to how the service deployment function entity 105 conducts service deployment, it is related to actual design, which is omitted herein for brevity. Overall, after the service deployment function entity 105 implements the deployment, a physical access address can be obtained and the address is published to the content description function entity 101 and stored therein as the content description.

Figures 1 to 3 are illustrations of system architectures where a content description function entity acquires media property information and service property information, respectively. However, in practice, the system for implementing IPTV service may provide one or more of the content provision function entity 103, the content protection function entity 104 and the service deployment function entity 105. For example, if the service provider can directly store the media property information in the content description function entity 101, the service provider does not need to deliver the content to the content description function entity 101 in a publishing manner, which means that the content provision function entity 103 can be omitted. If the content does not need to be protected, the content protection description and the content protection information may not be needed, which means that the content protection function entity 104 can be omitted. If a particular physical access address is specified in advance for providing content to the user, and the physical access address is directly stored in the content description function entity 101, the service deployment function entity 105 can be omitted.

With respect to the content description entity providing content description, if the IPTV system includes a service selection function entity 106, the content description function entity 101 may provide content description to the service selection function entity 106. The service selection function entity 106 may generate an electronic program guide (EPG) based on the content description and delivers the EPG to the user.

Figure 4 is an illustration of a system architecture where a content description function entity provides content description to a service selection function entity. As illustrated in Figure 4, the system includes a content description function entity 101, an IPTV service control entity 102, and a service selection function entity 106. The interface between the content description function entity 101 and IPTV service control entity 102 may still be the I1 interface. The interface between the content description function entity 101 and the service selection function entity 106 may be an 12 interface. In other words, when the service selection function entity 106 needs to generate an EPG, the service selection function entity 106 may acquire content description from the content description function entity 101 via the 12 interface, or via the IPTV service control entity 102, which means to acquire content description via I1 interface. Thus, when the service selection function entity 106 acquires the content description, EPG may be generated according to a method of generating EPG. The generated EPG may include entire or partial content description. The method of generating of EPG is disclosed in prior art, which is omitted for brevity. The purpose of generating EPG is to facilitate the user to know about content related information, e.g. brief description of the content on demand, purchasing price of the content, playing time, etc., so as to decide whether or not to initiate an IPTV service request.

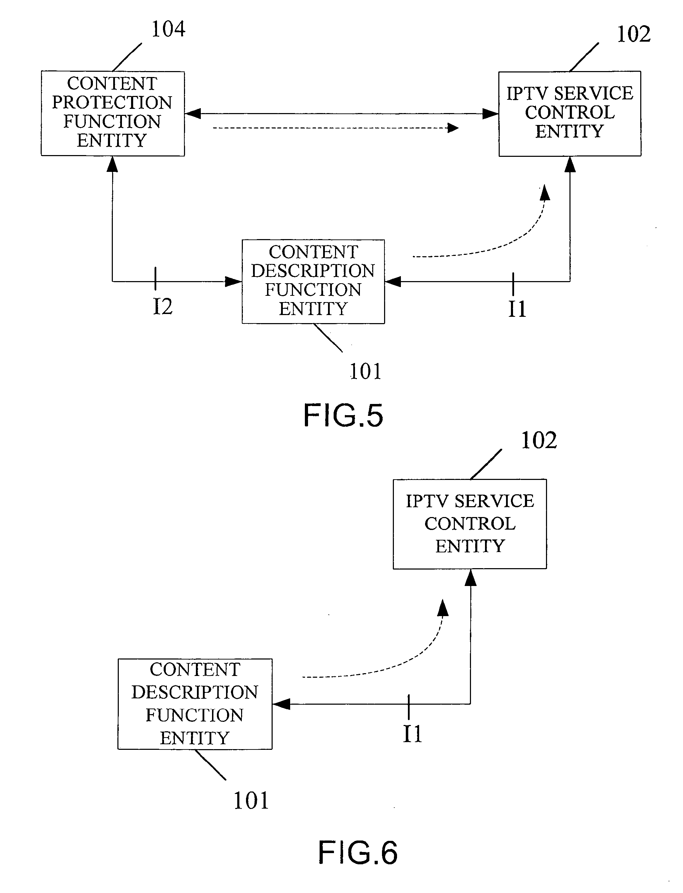

If the content description includes content protection description, the system for implementing IPTV service may include a content protection function entity 104. Figure 5 illustrates a system where the content description function entity provides content protection description. As illustrated in Figure 5, in an IMS session, the IPTV service control entity 102 may acquire content protection description from the content description function entity 101 via I1 interface, and acquire content protection information, such as key, copyright object, etc., from the content protection function entity 104 based on the acquired content protection description. Alternatively, the content description function entity 101 does not directly provide content protection description to the IPTV service control function entity 102, instead, it directly acquires content protection information from the content protection function entity 104 via I3 interface based on the content protection description and returns the content protection information to the IPTV service control entity 102.

If the content description includes a content ID, and the IPTV service request initiated by a user carries a reference ID generated based on a content description keyword, the content description function entity 101 is required to conduct a content matching operation based on the content description. Figure 6 is an illustration of a system architecture where a content description function entity performs a content matching operation based on the content description. As illustrated in Figure 6, when IPTV service control entity 102 receives the IPTV service request carrying a reference ID, the IPTV service control entity 102 may send a content description request message to the content description function entity 101. The content description function entity 101 locates the corresponding content description based on the reference ID in the content description request message and returns the content ID in the description of the located content to the IPTV service control entity 102. It is noted that the content description function entity 101 herein only returns the content ID. However, in practice, the content description function entity 101 may also be able to return other content description.

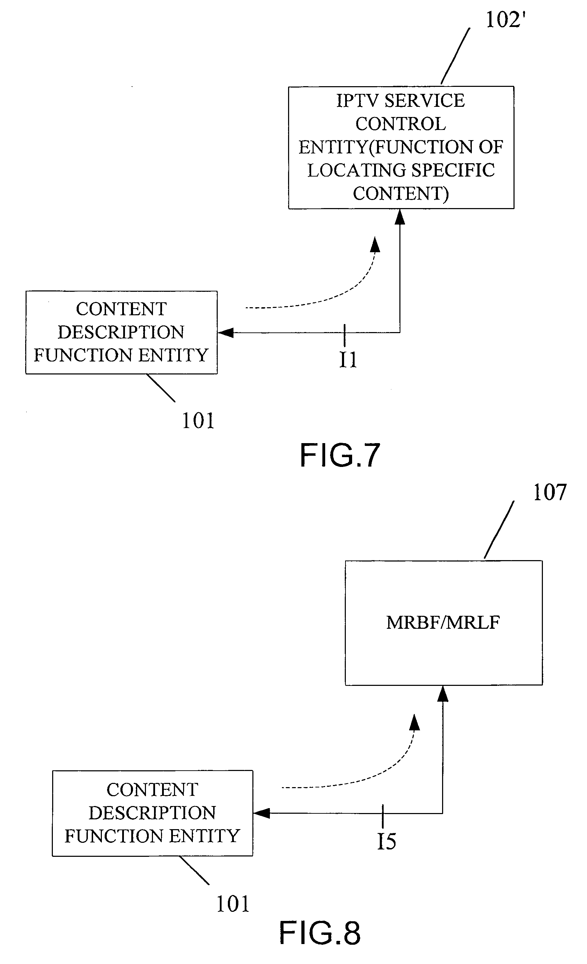

If the content description includes a physical access address, and an IPTV service control entity 102' itself is able to locate content, the content description function entity 101 may provide content description for content location. The content location indicates that one or more physical access addresses all store content which may be provided to the user. Then, the IPTV service control entity 102' is required to determine in one or more of the physical access addresses the physical access address of the content that will be provided to the user. The determined physical access address of the content can be one or more. In other words, the content acquired by the user may be provided by a media device or a multicast group corresponding to one physical access address, or may be provided by a plurality of media devices or multicast groups that contain the same content. Figure 7 is an illustration of a system where a content description function entity provides content description to an IPTV service control entity for content location. As illustrated in Figure 7, when the IPTV service control entity 102' receives an IPTV service request from a user, the IPTV service control entity 102' may send a content description request message to the content description function entity 101 according to the IPTV service request. The content description function entity 101 returns the content description to the IPTV service control entity 102'. The IPTV service control entity 102' then locates the content based on the content description and determines the physical access address of the content.

In practice, if the IPTV service control entity 102 itself is not provided with a function for locating content, the function can be provided by other network device for content location, such as a media resource broker/location function entity 107 (MRBF/MRLF). Figure 8 is an illustration of a system where a content description function entity provides content description to MRBF/MRLF for content location. As illustrated in Figure 8, when the MRBF/MRLF 107 receives a media request, the MRBF 107 may send a content description request message to the content description function entity 101 via the I5 interface. The content description function entity 101 returns the content description to the MRBF/MRLF 107. The MRBF/MRLF 107 then locates the content based on the content description and determines the physical access address of the content.

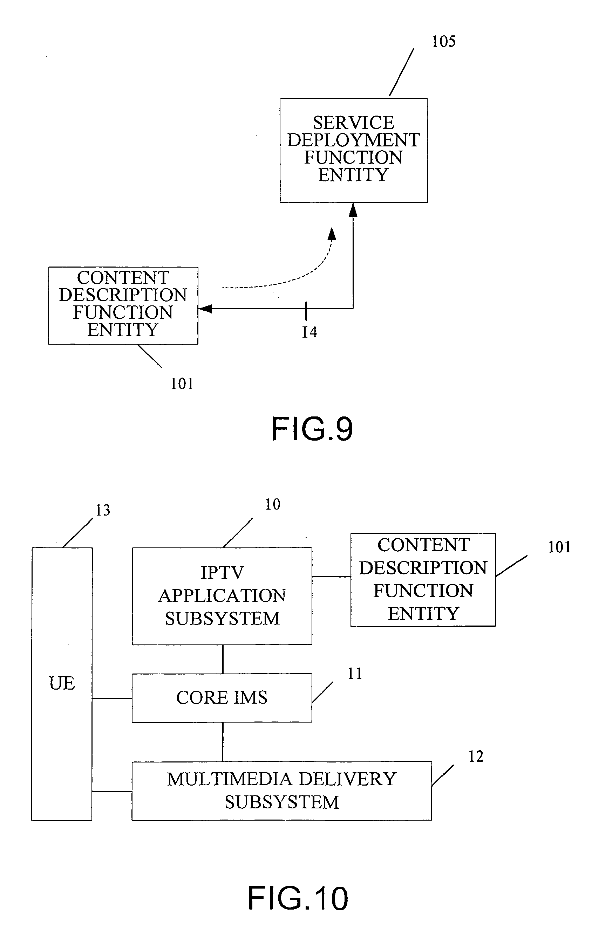

If the content description includes a physical access address, and the system for implementing IPTV service includes a service deployment function entity 105, the content description function entity 101 may also provide content description to the service deployment function entity 105 for deploying services. Figure 9 is an illustration of a system architecture where a content description function entity provides content description for service deployment. When service deployment needs to be conducted again, the service deployment function entity 105 may acquire the content ID, location information of the content source, the original physical access address, etc., from the content description function entity 101 and may perform a service deployment based on the network status and return a new physical access address after deployment to the content description function entity 101 for storage.

Figures 4-9 are illustrations where a content description function entity provides content description to perform content matching, content location, content protection, service selection, service deployment, etc. In practice, the system may implement an arbitrary combination of one or more of the foregoing functions. How to combine these functions is decided by the user applying the embodiments of the present invention, which is omitted herein for brevity.

Figures 1-9 illustrate respectively how the IPTV service control entity 102, the content provision function entity 103, the content protection function entity 104, the service deployment function entity 105 interact with the content description function entity 101, i.e. how the content description function entity 101 acquires content description from the foregoing entities and how to provide content description to the foregoing entities. I1-I6 interfaces may all be implemented with or without SOAP, SIP, or HTTP, provided that the interaction function can be accomplished.

In practice, some functions can be processed together. For instance, if the content description includes a content ID, a content protection description, and a physical access address, and when the IPTV service control entity 102 receives an IPTV service request, the IPTV service control entity 102 may send to the content description function entity 101 a content description request message carrying a reference ID. The content description function entity 101 may perform a content matching operation based on the reference ID and return the corresponding content ID and the content protection description together with the physical access address to the IPTV service control entity 102. The IPTV service control entity 102 may then obtain content protection information from the content protection function entity 104 by virtue of the content protection description, and utilizes the physical access address to locate the content so as to achieve functions such as matching, locating, and protecting the content.

The above statement that "some functions can be processed together" may also be reflected in the combination of functions of function entities. In other words, the content description function entity may be an independent entity, or may be a function module of a particular entity in an IPTV application subsystem. For example, if the IPTV service control entity 102 is able to provide content description, then the content description function and the IPTV service control function can be combined. In other words, the content description as required in service selection, content location, content protection, content deployment in the IPTV service procedure may all be from the IPTV service control entity 102. For another example, the content description function entity 101 may be combined with the service selection function entity 106. In this case, the I2 interface may be an internal interface. In other words, the service selection function entity 106 may also provide content description to the IPTV service control entity 102, the service deployment function entity 105, and content protection function entity 104 so as to perform content matching, content location and content protection, etc. The details as to how to combine these functions may rely on the practical circumstances, which will not be enumerated for brevity.

Figures 1-9 illustrate respective interactions between the content description function entity 101 and other entities. These interactions may be reflected in the system for implementing IPTV service. Detailed description will be made to a system for implementing IPTV service including a content description function entity 101.

Figure 10 is a block diagram of a system for implementing IPTV service according to a first system embodiment of the present invention. As illustrated in Figure 10, the system includes an IPTV application subsystem 10, an IP multimedia subsystem 11 (Core IMS), a multimedia delivery subsystem 12, a user equipment (UE) 13, a content description function entity 101.

The content description function entity 101 is configured to provide content description.

The IPTV application subsystem 10 is configured to interact with the Core IMS11 during an IMS session, receive an IPTV service request from the UE 13, interact with the content description function entity 101 according to the IPTV service request so as to acquire the content description, and enable the multimedia delivery subsystem 12 to provide content to the UE 13 based on the acquired content description.

The Core IMS 11 is configured to implement the interaction among the UE 13, IPTV application subsystem 10 and multimedia delivery subsystem 12.

The multimedia delivery subsystem 12 is configured to deliver content to the UE 13.

The UE 13 is configured to initiate the IPTV service request to the IPTV application subsystem 10 in an IMS session and receive the content delivered from the multimedia delivery subsystem 12.

In this way, when the UE 13 initiates the IPTV service request towards the IPTV application subsystem 10 via the Core IMS 11, the IPTV application subsystem 10 acquires content description from the content description function entity 101 according to the IPTV service request. The multimedia delivery subsystem 12 may be able to provide content to the UE 13 based on the acquired content description. Thus, IPTV service is achieved.

In practice, the IPTV application subsystem 10 may include an IPTV service control entity 102' having a function for locating content, and a service selection function entity 106 for generating EPG. The multimedia delivery subsystem 12 may include a media control/distribution function entity 1201 (MCF/MDF), and a multimedia transmission device 1202.

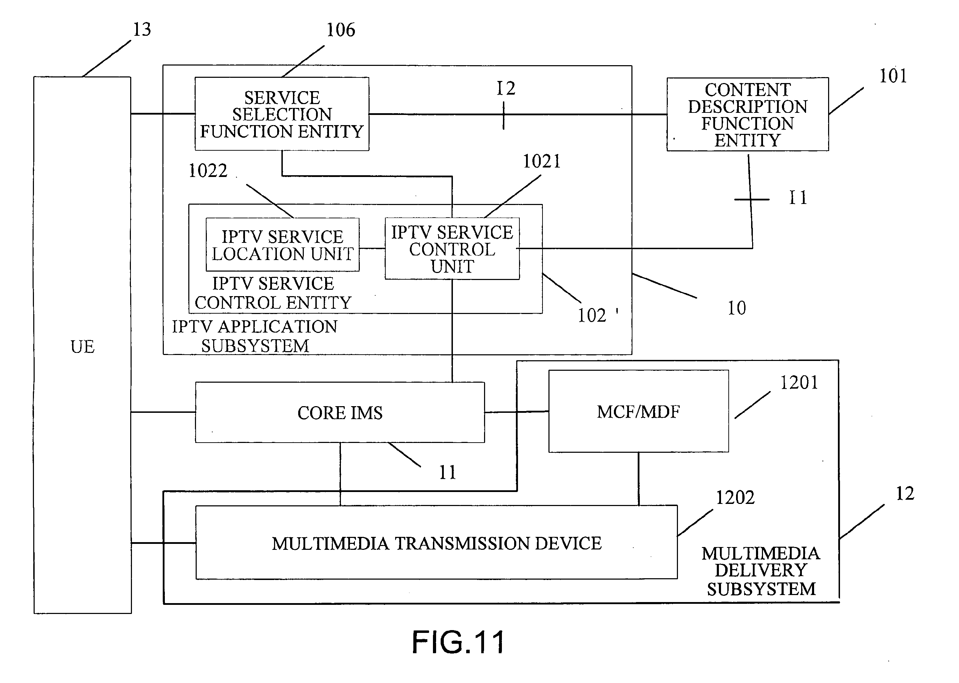

In this case, a second system embodiment of the present invention for implementing IPTV service is shown in Figure 11. The functionalities and relationship among the IPTV application subsystem 10, the Core IMS 11 , the multimedia delivery subsystem 12, the UE 13, the content description function entity 101 are similar to those in Figure 10, which are omitted for brevity. The difference is that the IPTV service control entity 102' is configured to interact with the Core IMS 11 during an IMS session, receive the IPTV service request from the UE 13, interact with the content description function entity 101 according to the IPTV service request so as to acquire the content description, and utilize the acquired content description to locate content so as to determine the physical access address of the content. The multimedia delivery subsystem 12 may be able to provide content to the UE 13 based on the physical access address of the content.

The foregoing functions of the IPTV service control entity 102' can be implemented by an IPTV service control unit 1021 and an IPTV service location unit 1022 in the IPTV service control entity 102'. The IPTV service control entity 1021 is configured to interact with the Core IMS 11 during an IMS session, receive an IPTV service request from the UE 13, interact with the content description function entity 101 according to the IPTV service request so as to acquire the content description, and deliver the content description to the IPTV service location unit 1022 for content location. The multimedia delivery subsystem 12 may be able to provide content to the UE 13 according to the physical access address of the content returned from the IPTV service location unit 1022. The IPTV service location unit 1022 locates the content based on the content description and returns the physical access address of the located content to the IPTV service control unit 1021.

The service selection function entity 106 is configured to interact with the content description function entity 101 so as to acquire the content description, employ the content description to generate an EPG, and deliver the generated EPG to the UE 13. The service selection function entity 106 may deliver the generated EPG directly to the UE 13, or may deliver the EPG to the UE 13 via the IPTV service control entity 102' during an IMS session. If the service selection function entity 106 delivers the generated EPG directly to the UE 13, there is no need to provide a connection between the service selection function entity 106 and the IPTV service control entity 102'. If the service selection function entity 106 needs to acquire content description from the content description function entity 101 via the IPTV service control entity 102', the service selection function entity 106 has to be connected to the IPTV service control entity 102'.

The MCF/MDF 1201 is configured to distribute the content and control the multimedia transmission device 1202 to deliver the content to the UE 13.

The multimedia transmission device 1202 is configured to deliver the content to the UE 13 under the control of MCF/MDF1201.

In other words, when the content description function entity 101 stores the content description, the service selection function entity 106 may acquire the content description from the content description function entity 101 so as to generate an electronic program guide (EPG), and deliver the generated EPG to the UE13. The UE 13 may determine an IPTV service to be requested according to the EPG, and initiate an IPTV service request to the IPTV service control entity 102' via the Core IMS 11. The IPTV service control unit 1201 in the IPTV service control entity 102' interacts with content description function entity 101 according to the IPTV service request so as to acquire the content description, delivers the content description to the IPTV service location unit 1022 for locating content, and determines the MCF/MDF 1201 which provides content for the user according to the physical access address returned from the IPTV service location unit 1022. The MCF/MDF 1201 then controls the multimedia transmission device 1202 to provide content to the UE 13.

In addition, the interface between the content description function entity 101 and the service selection function entity 106 may be an I2 interface. The interface between the content description function entity 101 and the IPTV service control entity 102' may be an I1 interface. The details are illustrated in Figure 4 and Figure 7, which are omitted herein for brevity.

In the foregoing system embodiment, if the UE 13 carries a reference ID, the content description function entity 101 may further perform a content matching operation to acquire an content ID based on the reference ID when the IPTV service control entity 102' and the content description function entity 101 interacts to acquire the content description. The content description including the content ID and the physical access address is then returned to the IPTV service control entity 102'. The details have been described in Figure 6, which are omitted herein for brevity.

In practice, the system for implementing IPTV service may further include a content provision function entity 103, a content protection function entity 104, and a service deployment function entity 105. Moreover, the multimedia delivery subsystem 12 may include an MRBF/MRLF 1203, a media resource function (MRF) 1204, and a multimedia transmission device 1202.

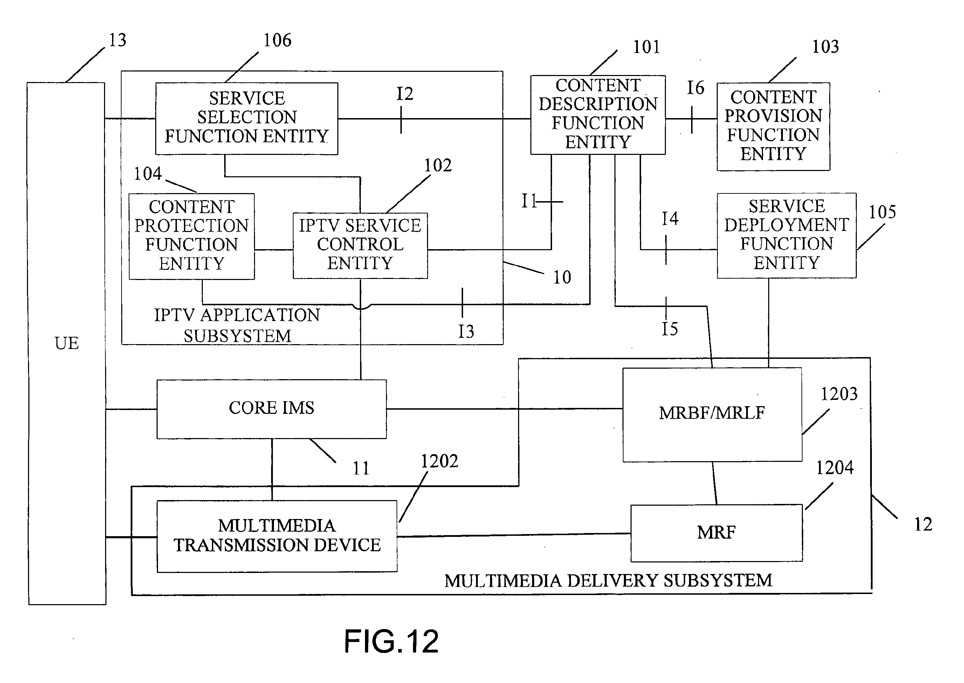

In this case, a third system embodiment of the present invention for implementing IPTV service is shown in Figure 12. The IPTV application subsystem 10, the IP multimedia subsystem core 11, the multimedia delivery subsystem 12, the UE 13, and the content description function entity 101 are similar to Figure 11. The difference is that the system further includes a content provision function entity 103, a content protection function entity 104, and a service deployment function entity 105.

The content provision function entity 103 is configured to provide content and publish the media property information of the content to the content description function entity 101 for storing as the content description.

The content protection function entity 104 is configured to store and provide content protection information, and directly publish the content protection description indicating the status of content protection to the content description function entity 101, or publish the content protection description, via the IPTV service control entity 102, to the content description function entity 101 for storing as the content description.

The service deployment function entity 105 is configured to deploy the content in the multimedia delivery subsystem 12, and directly publish a physical access address after deployment to the content description function entity 101, or publish the physical access address, via the IPTV service control entity 102, to the content description function entity 101 for storing as the content description.

Apparently, the content provision function entity 103, the content protection function entity 104, and the service deployment function entity 105 are described in accordance with the content description being input to the content description function entity 101, which are the same as in Figure 1 to Figure 3. If the content protection function entity 104 and the service deployment function entity 105 require content description from the content description function entity 101, the descriptions are the same in Figure 5 and Figure 9, which are omitted herein for brevity.

In addition, in one embodiment, the multimedia delivery subsystem 12 may include an MRBF/MRLF, an MRF 1204 and a multimedia transmission device 1202.

The media resource proxy/location function entity 1203 actually includes an MRBF and an MRLF. The functionalities of the MRBF and MRLF are similar, except that the MRBF is configured to acquire content description from the content description function entity 101 according to the request of the IPTV application subsystem 10, locate the content according to the content description so as to determine the physical access address of the content, and allows the media resource function 1204 to deliver the content to the UE 13 according to the physical access location of the content. However, the MRLF is configured to acquire content description from the content description function entity 101 according to the request of the IPTV application subsystem 10, locate the content according to the content description so as to determine the physical access address of the content, and return the physical access location of the content to the IPTV application subsystem 10.

Although the media resource proxy function entity and the media resource location function entity 1203 include two different functions, in practice, one of the two functions can be selected for implementation. The detailed implementation is illustrated in another patent application of the present applicants, which are omitted herein for brevity.

In addition, in one embodiment, the MRF 1204 may deliver the content to the UE 13 via the multimedia transmission device 1202. The multimedia transmission device 1202 may deliver the content to the UE 13 under the control of the MRF.

In this system embodiment, when the content provision function entity 103 needs to provide a new content, it may publish the media property information of the content to the content description function entity 101. The content description function entity 101 generates a content ID for the new content and stores the corresponding media property information. The content protection information for the protected content may be stored in the content protection function entity 104 which then publishes the content protection description to the content description function entity 101 for storage. At the same time, the content description function entity 101 may carry location information of the content source in the content ID and the media property information and transmit the location information to the service deployment function entity 105 for service deployment. The service deployment function entity 105 may then return the physical access address after deployment to the content description function entity 101. Thus, the content description function entity 101 stores complete content description of the new content and may trigger the service selection function entity 106 to generate a new EPG based on the content description and deliver the generated EPG to the UE 13. Meanwhile, the UE 13 may select an IPTV service to be requested according to the EPG, incorporate the content ID or reference ID in an IMS session, and initiate an IPTV service request to the IPTV service control entity 102 via the Core IMS 11. The IPTV service control entity 102 sends a content description request message to the content description function entity 101 according to the IPTV service request. The content description function entity 101 returns content protection description to the IPTV service control entity 102 according to the content ID in the content description request message, or returns content protection description to the IPTV service control entity 102 after using the reference ID to match the content. On the one hand, the IPTV service control entity 102 may send the media request message carrying the content ID directly to the media resource proxy/location function entity 1203 which may obtain the physical access address from the content description function entity 101 based on the content ID to perform the content location and determine the MRF 1204 for delivering content to users. The MRF 1204 then controls the multimedia transmission device 1202 to deliver the content to the UE 13. On the other hand, the IPTV service control entity 102 acquires content protection information, such as key, copyright object, etc., from the content protection function entity 104 according to the returned content protection description. Then, the UE 13 receives the content transmitted from the multimedia transmission device 1202 and at the same time employs the content protection information to decipher the protected content or authenticate the protected content with the copyright object, such that the IPTV service is achieved.

Alternatively, in practice, the system for implementing IPTV service may not include all of the content provision function entity 103, the content protection function entity 104 and the service deployment function entity 105 as described in the second system embodiment. The system may include a combination of one or more of the aforementioned elements. The content provision function entity 103, the content protection function entity 104, the service deployment function entity 105 and the service selection function entity might not be directly interacted with the content description function entity 101, instead, they may be interacted with the content description function entity 101 via the IPTV service control entity 102. In other words, the system may omit one or more of the content provision function entity 103, the content protection function entity 104 and the service deployment function entity 105, or omit entire or partial I2-I6 interfaces. If one of the content provision function entity 103, the content protection function entity 104 and the service deployment function entity 105 exists, but there is no interface for direct interaction with the content description function entity 101, the I1 interface can be used for interaction with the content description function entity 101.

Further, in the system for implementing IPTV service, the content description function entity might be combined with other function entity, which means that the content description function in the system may not be embodied in a separate entity alone, but may be embodied in other function entity as a function module. For instance, if the IPTV service control entity 102 includes a content description function, then I1 interface can be omitted or I1 interface can be used as an internal interface in the IPTV service control entity 102. Meanwhile, I2-I6 interfaces may still exist with no change in their functions. The only change is that these interfaces may no longer be coupled to the content description function entity. Rather, they become interfaces coupled to the IPTV service control entity 102. For yet another instance, the service selection function entity 106 may include a content description function, then the I2 interface may be omitted, or the I2 interface can be served as an internal interface in the service selection function entity 106. The other interfaces become interfaces coupled to the service selection function entity 106.

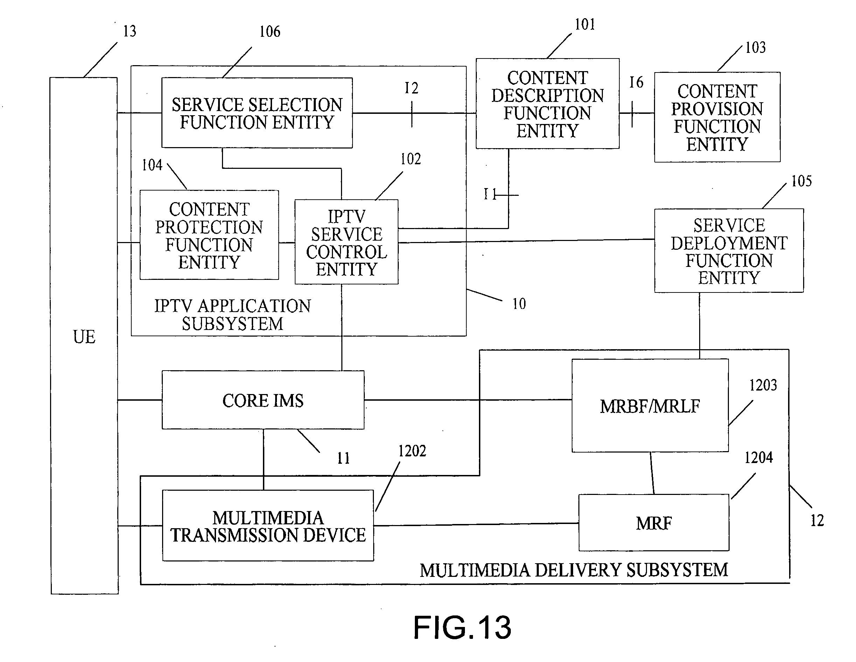

Figure 13 is a block diagram of a system for implementing IPTV service according to a fourth system embodiment. As illustrated in Figure 13, the system is basically similar to the one in Figure 12. The difference is that I3, I4 and I5 interfaces do not exist in this embodiment. The content protection function entity 104, the service deployment function entity 105 and the MRBF/MRLF 1203 interact with the content description function entity 101 via the I1 interface. Further, the content protection function entity 104 may deliver the content protection information directly to the UE 13 without IMS session. That is, the content protection information is delivered to the UE 13 via Core IMS 11. The rest of the description of this embodiment is similar to the third system embodiment, which is omitted herein for brevity.

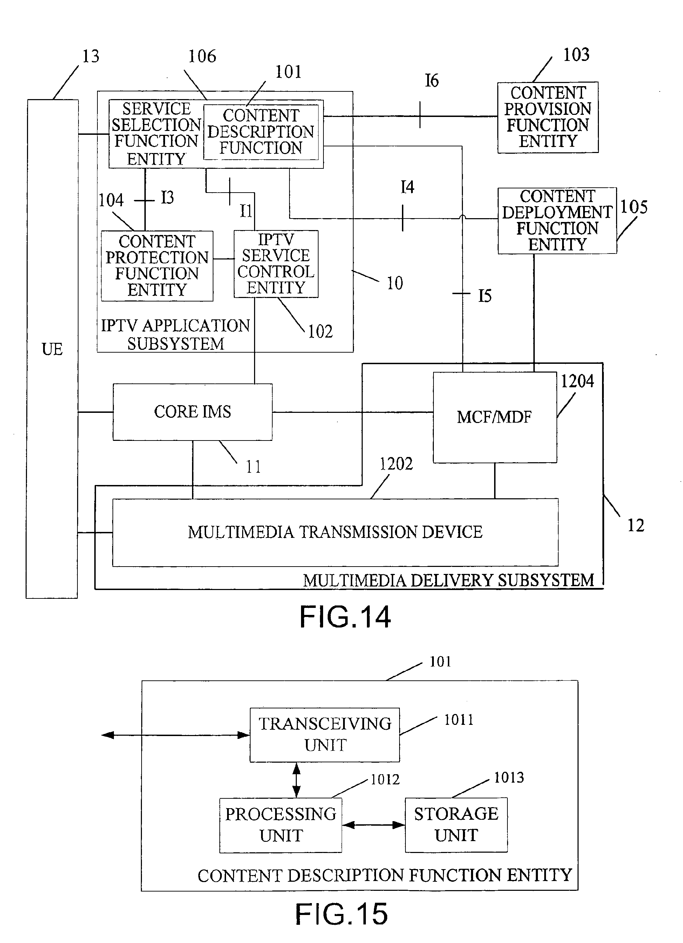

Figure 14 is a block diagram of a system for implementing IPTV service according to a fifth system embodiment. As illustrated in Figure 14, the service selection function entity 16 incorporate the content description function and the interface between the service selection function entity 106 and the IPTV service control entity 102 may achieve the function of I1 interface. The other entities, such as the content protection function entity 104, the service deployment function entity 105, the media control/distributing function entity 1204, and the content provision function entity 103 have a respective I3, I4, I5, I6 interface with the service selection function entity 106. The functions of these interfaces are identical with the ones in the first to fourth system embodiments. Also, other entities, such as the content protection function entity 104, the content deployment function entity 105, the media control/distributing function entity 1204, the content provision function entity 103, etc., may not all exist in the system. The system may just include a combination of one or more of the foregoing function entities, or none. The existence of I3-I6 interfaces depends on the specific situation.

In practice, the content description function can not only be incorporated into the service selection function entity 106, but also be incorporated with other function entity to provide functions such as service selection, content location, content matching, content protection, and service deployment, etc., which may not be detailed herein.

Based on the foregoing system, the present invention also provides an apparatus for implementing IPTV service. The apparatus is a content description function entity 101. Figure 15 is an internal illustration of the content description function entity. As illustrated in Figure 15, the apparatus includes:
a transceiving unit 1011 for interaction between the content description function entity itself and outside entities;
a processing unit 1012, configured to extract content description from a storage unit according to a content description request message from the transceiving unit, and transmit the extracted content description via the transceiving unit; and
the storage unit 1013, configured to store the content description.

In practice, when receiving the content description from an outside entity via the transceiving unit 1011, the processing unit 1012 may also store the received content description into the storage unit.

If the IPTV service request initiated by the user carries a reference ID, the content description request message sent from the IPTV service control entity 102 to the content description function entity 101 may also carry a reference message. In this case, the processing unit 1012 may also perform a content matching operation based on the reference ID and the content description in the storage unit 1013, and return the entire or partial description of the matched content to the IPTV service control entity 102.

In practice, if the processing unit 1012 receives a request message for content protection information, it may perform no operation by just forwarding the message to the content protection function entity.

Based on the foregoing system, the present invention further proposes an apparatus for incorporating a content description function into an IPTV service control entity. That is, the IPTV service control entity may include:
a service control function module, configured to interact with the Core IMS during an IMS session, receive an IPTV service request from a UE, interact with the content description function module according to the IPTV service request so as to acquire the content description, and utilize the content description to locate content so as to determine the physical access address of the content based on which the multimedia subsystem may be able to provide content to the UE; and
the content description function module, configured to provide content description.

Likewise, the present invention further proposes an apparatus for incorporating a content description function into a service selection function entity. That is, the service selection function entity may include:
a service selection function module, configured to interact with the content description function module so as to acquire the content description, utilize the content description to generate EPG, and deliver the generated EPG to a UE; and
the content description function module, configured to provide content description.

No matter it is the apparatus where the content description function is incorporated into the IPTV service control entity, or the apparatus where the content description function is incorporated into the service selection function entity, the internal structure of the content description function module is illustrated in Figure 15, which is omitted herein for brevity.

Based on the foregoing system and the apparatus embodiments, method embodiments are further provided for implementing IPTV service.

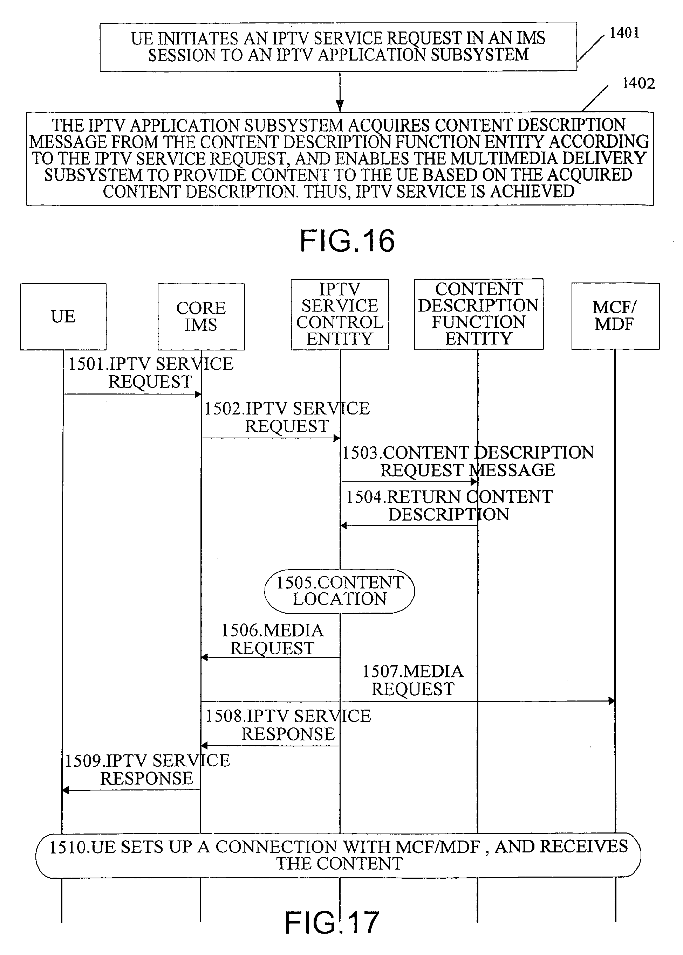

Figure 16 is a flowchart according to a first method embodiment of the present invention. As illustrated in Figure 16, the first method embodiment includes below steps.

Step 1401, a UE initiates an IPTV service request in an IMS session to an IPTV application subsystem.

Step 1402, the IPTV application subsystem acquires content description from the content description function entity according to the IPTV service request, and enable the multimedia delivery subsystem to provide content to the UE based on the acquired content description. Thus, IPTV service is achieved.

In this step, the solution can be classified into three types in accordance with the status of content location.

In the first solution, if the content description includes a physical access address of the content, the IPTV application subsystem includes an IPTV service control entity, and the multimedia subsystem includes an MCF/MDF, the method of IPTV application subsystem acquiring the content description from the content description function entity according to the IPTV service request and enabling the multimedia delivery subsystem to provide content to the UE based on the acquired content description may include the following steps.

The IPTV service control entity sends a content description request message to the content description function entity according to the IPTV service request from the UE. The content description function entity returns the content description containing the physical access address to the IPTV service control entity according to the content description request message. The ITPV service control entity locates the content based on the returned content description and determines the physical access address of the content. The IPTV service control entity then enables the MCF/MDF to provide content to UE according to the physical access address of the content.

The method for IPTV service control entity to enable the MCF/MDF to provide content to UE according to the physical access address of the content may further be divided into two types of methods.

The first method is that the IPTV service control entity sends a media request message to the MCF/MDF according to the physical access address of the content, and returns the physical access address of the content to UE during an IMS session procedure. The UE then sets up a connection with the MCF/MDF according to the physical access address of the content and receives the content provided by the MCF/MDF.

The second method is that the IPTV service control entity returns the physical access address of the content to the UE during an IMS session procedure. The UE sends a media request message to the MCF/MDF according to the physical access address of the content, and sets up a connection with MCF/MDF and receives the content provided by the MCF/MDF.

If the IPTV service request initiated by the UE carries a reference ID, the method may further includes the following steps after the IPTV service control entity sends a content description request message to the content description function entity and before the content description function entity returns the content description.

The content description function entity performs a content matching operation according to the reference ID, and regards the description of the matched content as the content description to be returned to the IPTV service control entity. The content description returned to the IPTV service control entity contains a physical access address.

In the second solution, if the content description includes a physical access address of the content, the IPTV application subsystem includes an IPTV service control entity, and the multimedia subsystem includes an MRBF and an MRF, the method for enabling the multimedia delivery subsystem to provide content to the UE may be described as followings.

The IPTV service control entity sends a media request message to the MRBF according to the IPTV service request. The MRBF sends a content description request message to the content description function entity according to the media request message. The content description function entity returns the content description containing the physical access address to the MRBF according to the content description request message. The MRBF locates the content based on the returned content description and determines the physical access address of the content. The MRBF then enables the MRF to provide content to UE according to the physical access address of the content.

Here, the method for the MRBF to enable the MRF to provide content to UE according to the physical access address of the content may further be divided into two types of approaches.

The first approach is that the MRBF sends a media request message to the MRF according to the physical access address of the content, and returns the physical access address of the content to UE via an IMS session procedure. The UE then sets up a connection with the MRF according to the physical access address of the content and receives the content provided by the MRF.

The second approach is that the MRBF returns the physical access address of the content to the UE via an IMS session procedure. The UE sends a media request message to the MRF according to the physical access address of the content, and sets up a connection with MRF and receives the content provided by the MRF.

Likewise, if the IPTV service request sent by UE carries a reference ID, and the media request sent from the IPTV service control entity to the MRBF carries a content ID obtained after content matching, then the method further includes the following steps after the IPTV service control entity receives the IPTV service request and before the IPTV service control entity sends the IPTV service request to the MRBF.

The IPTV service control entity sends a content description request message to the content description function entity. The content description request message carries a reference ID. The content description function entity performs a content matching operation based on the reference ID and returns description of the matched content to the IPTV service control entity, where the content description returned to the IPTV service control entity includes at least a content ID.

In the third solution, if the content description includes a physical access address of the content, the IPTV application subsystem includes an IPTV service control entity, and the multimedia subsystem includes an MRLF/MRF, the method for enabling the multimedia delivery subsystem to provide content to the UE may be described as followings.

The IPTV service control entity sends a media request message to the MRLF according to the IPTV service request. The MRLF sends a content description request message to the content description function entity according to the media request message. The content description function entity returns the content description containing the physical access address to the MRLF according to the content description request message. The MRLF locates the content based on the returned content description, determines the physical access address of the content and returns the determined physical access address of the content to the IPTV service control entity. The IPTV service control entity then enables the MRF to provide content to UE according to the physical access address of the content.

The method of IPTV service control entity enabling the MRF to provide content to UE according to the physical access address of the content may also be divided into two types of approaches.

The first approach is that the IPTV service control entity sends a media request message to the MRF according to the physical access address of the content, and returns the physical access address of the content to a UE via an IMS session procedure. The UE then sets up a connection with the MRF according to the physical access address of the content and receives the content provided by the MRF.

The second approach is that the IPTV service control entity returns the physical access address of the content to the UE via an IMS session procedure. The UE sends a media request message to the MRF according to the physical access address of the content, and sets up a connection with MRF and receives the content provided by the MRF.

Likewise, if the IPTV service request sent by a UE carries a reference ID, and the media request sent from the IPTV service control entity to the MRLF carries a content ID obtained after content matching, then the method further includes the following steps after the IPTV service control entity receives the IPTV service request and before the IPTV service control entity sends the IPTV service request to the MRLF.

The IPTV service control entity sends a content description request message to the content description function entity. The content description request message carries a reference ID. The content description function entity performs a content matching operation based on the reference ID and returns the description of matched content to the IPTV service control entity, where the content description returned to the IPTV service control entity includes at least a content ID.

To provide a better understanding of the method for implementing IPTV service, a first and a second method embodiment are described below in detail.

In the second method embodiment, the structure of the system for implementing IPTV service is illustrated in Figure 11, which is omitted herein for brevity. In this embodiment, the content description may include a content ID, media property information, and service property information. The service property information includes a physical access address of the content. Further, the IPTV application subsystem may include an IPTV service control entity. The multimedia subsystem may include an MCF/MDF.

Figure 17 is an illustration of a message flow according to the second method embodiment of the present invention. As illustrated in Figure 17, the embodiment includes the following steps.

Step 1501-1502: In an IMS session, a UE may initiate an IPTV service request to the IPTV service control entity through an IP multimedia subsystem core, where the IPTV service request carries a content ID.

In practice, the UE may initiate an IPTV service request via an IMS session setup request message, i.e. an INVITE message.

In addition, the IPTV service request in this step carries a content ID. However, in practice, the IPTV service request may also carry a reference ID, and the content ID can be obtained from a subsequent content matching operation. Alternatively, if the system only provides a single content, the content ID can be omitted.

Step 1503: The ITPV service control entity sends a content description request message to the content description function entity according to the IPTV service request, wherein the content description request message carries a content ID.

Step 1504: The content description function entity returns a corresponding content description containing a physical access address to the IPTV service control entity according to the content ID in the content description request message.

In practice, in this step, the content description function entity may return the content ID and the corresponding physical access address only, or may return other information in the content description. The specific returned information is decided by the user applying the present invention.

In addition, in this embodiment, the content ID in the IPTV service request can be used directly to determine the returned content description. In practice, if the IPTV service request carries a reference ID, the content description function entity is required to match content description with the reference ID, i.e. match the content description it stores with the keyword for generating the reference ID. The description of matched content serves as the content description to be returned to the IPTV service control entity. The content description function entity may return the content ID and the corresponding physical access address only.

Step 1505: The IPTV service control entity locates the content according to the returned content description and determines the physical access address of the content.

In this step, content location performed by the IPTV service control entity means to select one out of the one or more physical access addresses returned. The physical access address may be a network address of a particular media device, or may be a multicast address.

Step 1506-1507: According to the physical access address of the content, the IPTV service control entity sends a media request message to the MCF/MDF via the IP multimedia subsystem core.

In this step, the address of the MCF/MDF is the physical access address determined after the content location at step 1505.

Step 1508-1509: The IPTV service control entity returns the physical access address of the content to UE through the IP multimedia subsystem core.

In this step, the IPTV service control entity may returns the physical access address of the content to UE in an IPTV service response. In practice, if the IPTV service request is initiated from the UE via an IMS session setup message, the IPTV service response can be returned to UE via a response to the IMS session setup message. That is, the physical access address of the content is returned to the UE via the response to the IMS session setup message.

Step 1510: The UE sets up a connection with MCF/MDF according to the physical access address of the content, and receives the content provided by the MCF/MDF.

In this embodiment, the IPTV service control entity sends a media request message to the MCF/MDF. In practice, the IPTV service control entity may also not send the media request message to the MCF/MDF. Instead, the UE may directly send the media request message to the MCF/MDF to setup the connection after the UE obtains the physical access address.

In the third method embodiment, the structure of the system for implementing IPTV service is illustrated Figure 12, which is omitted herein for brevity. In this embodiment, the content description may include a content ID, media property information, and service property information. The service property information includes a physical access address of the content. Further, in this embodiment, the IPTV application subsystem may include an IPTV service control entity. The multimedia subsystem may include an MRBF and an MRF.

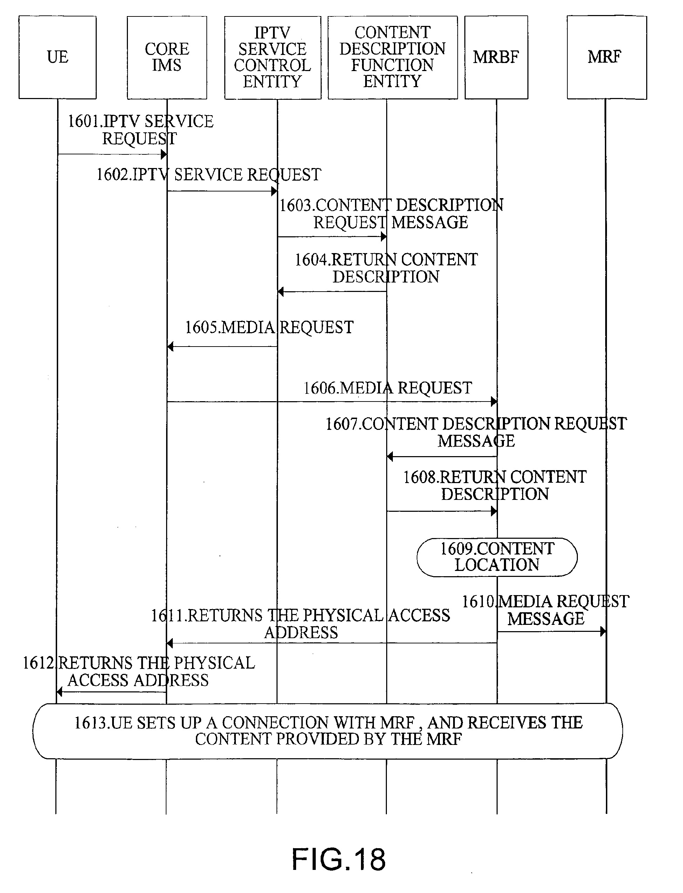

Figure 18 is an illustration of a message flow according to the third method embodiment of the present invention. As illustrated in Figure 18, the method according to the present embodiment includes below steps.

Step 1601-1602: In an IMS session, a UE may initiate an IPTV service request to the IPTV service control entity through an IP multimedia subsystem core, where the IPTV service request carries a reference ID.

Steps 1601-1602 in this embodiment and steps 1501-1502 in the second method embodiment are similar except that the present embodiment relates to the reference ID. The similar part will not be described in detail.

Step 1603: The ITPV service control entity sends a content description request message to the content description function entity according to the IPTV service request, where in the content description request message carries a reference ID.

Step 1604: The content description function entity performs content matching according to the reference ID, and obtains a corresponding content ID which is then returned to the IPTV service control entity.

Step 1605-1606: The IPTV service control entity sends a media request message to the MRBF through an IP multimedia subsystem core, where the media request message carries a content ID.

Step 1607: The MRBF sends a content description request message to the content description function entity according to the media request message, where the content description request message carries a content ID.

Step 1608: The content description function entity returns a corresponding content description containing a physical access address to the MRBF according to the content ID in the content description request message.

Step 1609: The MRBF locates the content according to the returned content description and determines the physical access address of the content.

Step 1610: The MRBF sends a media request message to MRF according to the physical access address of the content.

In this step, the address of the MRF is the physical access address determined after the content location at step 1609.

Step 1611-1612: The MRBF returns the physical access address of the content to UE through the IP multimedia subsystem core.

In practice, the multimedia subsystem core may also return to the UE the content ID together with the physical access address of the content.

Step 1613: The UE sets up a connection with MCF/MDF according to the physical access address of the content, and receives the content provided by the MCF/MDF.

The present embodiment is based on the assumption of providing MRBF in the media delivery subsystem. If the MRLF is provided instead, the method will be similar to the present method embodiment. The difference is that, at step 1610, the MRLF may not be able to directly request the media from the MRF as MRBF does, instead, the MRLF may return the physical access address of the located content to the IPTV service control entity and have the IPTV control entity request the media from the MRF.

In addition, if the content description function entity is a function module in the IPTV application subsystem, e.g. a module in the IPTV service control entity, or a module in the service selection function entity, another method for implementing IPTV service is provided. Below is an example where the content description function entity serves as a module in the service selection function entity.

In other words, if the content description function entity is a module in the service selection function entity, then, the method for implementing IPTV service may be described below.

A UE initiates an IPTV service request to the IPTV application subsystem in an IMS session. The IPTV application subsystem acquires content description from the service selection function entity according to the IPTV service request, and enables the multimedia delivery subsystem to provide content to the UE based on the acquired content description. Thus, IPTV service is achieved.

Further, if the content description includes a physical access address of the content, the IPTV application subsystem includes an IPTV service control entity, and the multimedia subsystem includes an MCF/MDF, the method of IPTV application subsystem acquiring the content description from the content description function entity according to the IPTV service request, and enabling the multimedia delivery subsystem to provide content to the UE based on the acquired content description may include the following steps.

The IPTV service control entity sends a content description request message to the service selection function entity according to the IPTV service request from the UE. The service selection function entity returns the content description containing the physical access address to the IPTV service control entity according to the content description request message. The ITPV service control entity locates the content based on the returned content description and determines the physical access address of the content. The IPTV service control entity then enables the MCF/MDF to provide content to UE according to the physical access address of the content.

Further, the method of IPTV service control entity enabling the MCF/MDF to provide content to UE according to the physical access address of the content may be described below.

The IPTV service control entity sends a media request message to the MCF/MDF according to the physical access address of the content, and returns the physical access address of the content to UE by virtue of an IMS session procedure. The UE then sets up a connection with the MCF/MDF according to the physical access address of the content and receives the content provided by the MCF/MDF.

Alternatively, the IPTV service control entity returns the physical access address of the content to the UE by virtue of an IMS session procedure. The UE sends a media request message directly to the MCF/MDF according to the physical access address of the content, and sets up a connection with MCF/MDF and receives the content provided by the MCF/MDF.

If the IPTV service request carries a reference ID, the method may further includes the following steps after the IPTV service control entity sends a content description request message to the content description function entity and before the content description function entity returns the content description.

The content description function entity performs a content matching operation according to the reference ID, and regards the description of the matched content as the content description to be returned to the IPTV service control entity. The content description returned to the IPTV service control entity contains a physical access address.

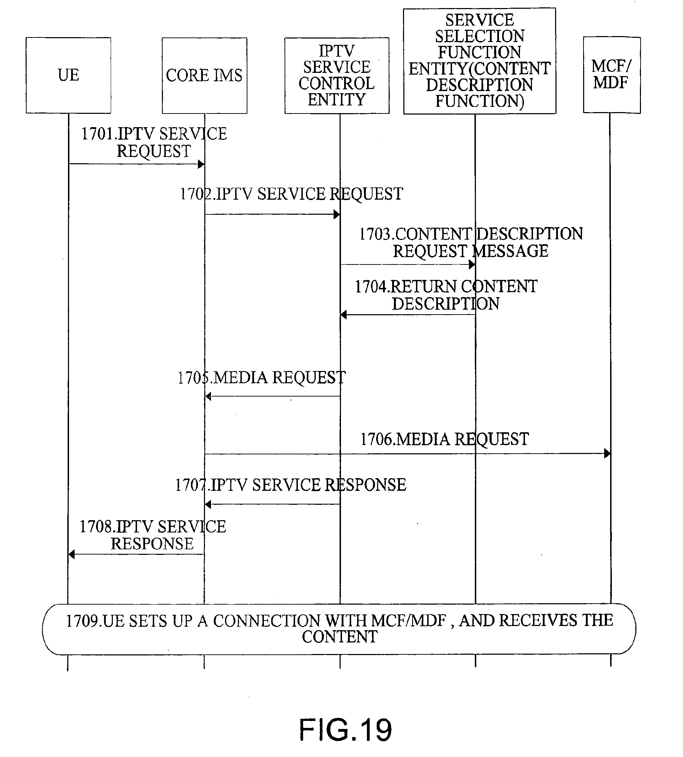

Figure 19 is an illustration of a message flow according to a fourth method embodiment of the present invention. This embodiment may correspond to the fifth system embodiment. The system architecture is illustrated in Figure 14.

As illustrated in Figure 19, the fourth method embodiment includes below steps.

Step 1701-1702: In an IMS session, a UE may initiate an IPTV service request to the IPTV service control entity through an IP multimedia subsystem core, where the IPTV service request carries a content ID.

In practice, the UE may initiate an IPTV service request via an IMS session setup request message, i.e. an INVITE message.

In addition, the IPTV service request in this step carries a content ID. However, in practice, the IPTV service request may also carry a reference ID instead, and the content ID can be obtained from a subsequent content matching operation. Alternatively, if the system only provides a single content, the content ID can be omitted.

Step 1703: The ITPV service control entity sends a content description request message to the service selection function entity according to the IPTV service request, wherein the content description request message carries a content ID.

Step 1704: The service selection function entity returns the content description to the IPTV service control entity.

In practice, in this step, the service selection function entity may return the content ID and the corresponding physical access address only, or may return other information in the content description. The specific returned information is decided by the user applying the present invention.

In addition, in this embodiment, the content ID in the IPTV service request can be used directly to determine the returned content description. In practice, if the IPTV service request carries a reference ID, the service selection function entity is required to match content description with the reference ID, i.e. match the content description it stores with the keyword for generating the reference ID. The description of matched content serves as the content description to be returned to the IPTV service control entity. The service selection function entity may return the content ID and the corresponding physical access address only.

Step 1705-1706: According to the physical access address of the content, the IPTV service control entity sends a media request message to the MCF/MDF via the IP multimedia subsystem core.

In this step, the address of the MCF/MDF is the physical access address determined after the content location as illustrated in step 1505. In practice, the address of the MCF/MDF can be obtained by IPTV service control entity performing a content location operation, or can be obtained by other entity performing a content location operation, provided that the IPTV service control entity is able to obtain the physical access address of the content.

Step 1707-1708: The IPTV service control entity returns the physical access address of the content to UE through the IP multimedia subsystem core.

In this step, the IPTV service control entity may returns the physical access address of the content to UE via an IPTV service response. In practice, if the IPTV service request is initiated by the UE via an IMS session setup message, the IPTV service response can be returned to UE via a response to the IMS session setup message. That is, the physical access address of the content is returned to the UE via the response to the IMS session setup message.

Step 1709: The UE sets up a connection with MCF/MDF according to the physical access address of the content, and receives the content provided by the MCF/MDF.

In this embodiment, the IPTV service control entity sends a media request message to the MCF/MDF. In practice, the IPTV service control entity may also not send the media request message to the MCF/MDF. Instead, the UE may directly send the media request message to the MCF/MDF to setup the connection after the UE obtains the physical access address.

In the first to fourth method embodiments, if the system also includes a content provision function entity, the content provision function entity may publish the media property information to the content description function entity for storage when new content is required.

In the first to fourth method embodiments, if the content description includes content protection description and if the content is protected in advance, acquiring content protection information by the UE may be implemented by the following four methods.

The first method is that the UE sends a request message for content protection information to the IPTV service control entity. The IPTV service control entity acquires the content protection description from the content description function entity according to the request message for content protection information and returns the acquired content protection description to UE. The UE may acquire the content protection information from the content protection function entity based on the content protection description.

The second method is that the UE sends a request message for content protection information to the IPTV service control entity. The IPTV service control entity acquires the content protection description from the content description function entity according to the request message for content protection information. The IPTV service control entity acquires the content protection information from the content protection function entity based on the content protection description, and returns the acquired content protection information to UE.

The third method is that the UE sends a request message for content protection information to the IPTV service control entity. The IPTV service control entity forwards the request message for content protection information to the content description function entity. The content description function entity determines corresponding content protection description according to the request message for content protection information, acquires the content protection information from the content protection function entity based on the content protection description, and returns the acquired content protection information to UE via the IPTV service control entity.

The fourth method is that the UE sends a request message for content protection information to the IPTV service control entity. The IPTV service control entity forwards the request message for content protection information to the content description function entity. The content description function entity determines corresponding content protection description according to the request message for content protection information, forwards the request message for content protection information to the content protection function entity based on the content protection description. The content protection function entity sends the content protection information to the UE via the IPTV service control entity according to the request message for content protection information, or sends the content protection information directly to the UE.

No matter which method is employed, the UE may be able to acquire the content protection information via an IMS session procedure. In this case, the request message for content protection information sent by UE may be the IPTV service request as described in the second to fourth method embodiments, which means that the UE may request the content protection information via the IPTV service request. In step 1504 in the second method embodiment and in step 1604 in the third method embodiment, the content description function entity may not only return the physical access address, but also may return the content protection description at the same time. Accordingly, in step 1704 in the fourth method embodiment, the service selection function entity including the content description function may not only return the physical access address, but also may return the content protection description at the same time.

In the first to fourth method embodiments, if the system for implementing IPTV service includes a service deployment function entity, and the content description function entity obtains location information of a content source for the new content and generates the content ID, the method may further include the following steps.

The content description function entity sends the content ID and the location information of the content source of the new content to the service deployment function entity. The service deployment function entity deploys the contents based on the content ID and the location information of the content source and publishes the physical access address obtained after deployment to the content description function entity for storing as the content description.

Then, the factors, such as network status, may also cause the service deployment function entity tore-deploy the content. The method is described below.

The service deployment function entity obtains the location information of the content source and the original physical access address from the content description function entity based on the acquired content ID, and then re-deploys the content according to the location information of the content source and the original physical access address. The service deployment function entity publishes the physical access address obtained after re-deployment to the content description function entity to replace the original physical access address.

When the content description function entity stores a new content description, or the content description in the content description function entity is updated, these factors may cause the service selection function entity to update EPG. The method may be described as below.

The content description function entity sends an update notification to the service selection function entity, where the update notification carries the updated content description. The service selection function entity generates EPG based on the updated content description and delivers the generated EPG to the UE.

When applying the solutions provided by the present invention, since the system for implementing IPTV service additionally provides a content description function, the content description function entity may provide content description to the IPTV application subsystem. The IPTV application subsystem may enable the media delivery subsystem to deliver content to the UE based on the content description such that the IPTV service is accomplished.

The foregoing is merely preferred embodiments of the present invention and is not intended to be limiting to the scope of the present invention. Any modifications, equivalents, improvements made within the spirit and principle of the present invention shall be construed as fall within the scope of the present invention.

## Claims

1. An apparatus for implementing IPTV service, **characterized in** comprising:
a transceiving unit, configured to interact between a content description function entity and an outside entity;
a processing unit, configured to extract content description from a storage unit according to a content description request message from the transceiving unit, and transmit the extracted content description via the transceiving unit; and
the storage unit , configured to store the content description.

2. The apparatus of claim 1, **characterized in that** the processing unit is further configured to store the received content description into the storage unit when receiving the content description from an outside entity via the transceiving unit.

3. The apparatus of claim 1, **characterized in that**, if the receiving content description request message carries a reference ID, the processing unit is further configured to perform a content matching with the reference ID, and returning the description of the matched content to the outside entity via the transceiving unit.

4. An IPTV service control entity, **characterized in** comprising:
a service control function module, configured to interact with an IP multimedia subsystem core (Core IMS) during an IMS session, receive an IPTV service request from a user equipment, interact with a content description function module according to the IPTV service request so as to acquire content description, utilize the content description to locate content so as to determine a physical access address of the content, and enable a multimedia subsystem to provide content to the user equipment according to the physical access address of the content; and
the content description function module, configured to provide the content description.

5. The IPTV service control entity of claim 4, **characterized in that,** the content description function module comprises:
a transceiving unit, configured to interact between the content description function module and the outside;
a processing unit, configured to extract content description from a storage unit according to a content description request message from the transceiving unit, and transmit the extracted content description via the transceiving unit; and
the storage unit , configured to store the content description.

6. A service selection function entity, **characterized in** comprising:
a service selection function module, configured to interact with a content description function module to acquire content description, utilize the content description to generate an electronic program guide (EPG), and deliver the generated EPG to a user equipment; and
the content description function module, configured to provide the content description.

7. The service selection function entity of claim 6, **characterized in that,** the content description function module comprises:
a transceiving unit, configured to interact between the content description function module and the outside;
a processing unit, configured to extract content description from a storage unit according to a content description request message from the transceiving unit, and transmit the extracted content description via the transceiving unit; and
the storage unit , configured to store the content description.

8. A method for implementing IPTV service, **characterized in** comprising:
receiving, by an IPTV application subsystem, an IPTV service request initiated from a user equipment in an IMS session; and
acquiring, by the IPTV application subsystem, content description from a content description function entity according to the IPTV service request, and enabling a multimedia delivery subsystem to provide content to the user equipment based on the acquired content description so as to implement the IPTV service.

9. The method of claim 8, **characterized in that,** the content description comprises a physical access address of the content, the IPTV application subsystem comprises an IPTV service control entity, and the multimedia subsystem comprises a media control function/distribution function entity (MCF/MDF);
acquiring, by the IPTV application subsystem, content description from a content description function entity according to the IPTV service request, and enabling a multimedia delivery subsystem to provide content to the user equipment based on the acquired content description further comprises:
sending, by the IPTV service control entity, a content description request message to the content description function entity according to the IPTV service request from the user equipment;
receiving, by the IPTV service control entity, the content description containing the physical access address which is returned from the content description function entity based on the content description request message;
locating, by the IPTV service control entity, the content according to the returned content description and determining the physical access address of the content; and
enabling, by the IPTV service control entity, the MCF/MDF to provide content to the user equipment according to the physical access address of the content.

10. The method of claim 9, **characterized in that,** the step of enabling, by the IPTV service control entity, the MCF/MDF to provide content to the user equipment according to the physical access address of the content comprises:
sending, by the IPTV service control entity, a media request message to the MCF/MDF according to the physical access address of the content, and returning, by the IPTV service control entity, the physical access address of the content to the user equipment by virtue of an IMS session procedure; setting up a connection, by the user equipment, with the MCF/MDF according to the physical access address of the content and receiving, by the user equipment, the content provided by the MCF/MDF; or
returning, by the IPTV service control entity, the physical access address of the content to the user equipment by virtue of an IMS session procedure; sending, by the user equipment, a media request message directly to the MCF/MDF according to the physical access address of the content; setting up a connection, by the user equipment, with MCF/MDF; and receiving, by the user equipment, the content provided by the MCF/MDF.

11. The method of claim 9, **characterized in that,** if the IPTV service request carries a reference ID, the method further comprises the following steps after the IPTV service control entity sends the content description request message to the content description function entity and before the IPTV service control entity receives the content description returned from the content description function entity:
performing, by the content description function entity, a content matching operation according to the reference ID, and using description of the matched content as the content description to be returned to the IPTV service control entity, wherein the content description returned to the IPTV service control entity contains the physical access address.

12. The method of claim 8, **characterized in that**, the content description comprises a physical access address of the content, the IPTV application subsystem comprises an IPTV service control entity, and the multimedia subsystem comprises a media resource broker/location function entity (MRBF/MRLF), and the step for enabling the multimedia delivery subsystem to provide content to the user equipment comprises:
sending, by the IPTV service control entity, a media request message to the MRBF according to the IPTV service request; sending, by the MRBF, a content description request message to the content description function entity according to the media request message; returning, by the content description function entity, the content description containing a physical access address to the MRBF according to the content description request message; locating the content, by the MRBF, based on the returned content description and determining the physical access address of the content; enabling, by the MRBF, the MRF to provide content to the user equipment according to the physical access address of the content.

13. The method of claim 12, **characterized in that**, the step of enabling, by the MRBF, the MRF to provide content to the user equipment according to the physical access address of the content comprises:
sending, by the MRBF, the media request message to the MRF according to the physical access address of the content, and returning the physical access address of the content to the user equipment by virtue of an IMS session; setting up a connection, by the user equipment, with the MRF according to the physical access address of the content and receiving the content provided by the MRF; or
returning, by the MRBF, the physical access address of the content to the user equipment by virtue of an IMS session; sending, by the user equipment, the media request message directly to the MRF according to the physical access address of the content; setting up a connection with MRF; and receiving the content provided by the MRF.

14. The method of claim 12, **characterized in that**, if the IPTV service request sent by the user equipment carries a reference ID, and the media request sent from the IPTV service control entity to the MRBF carries a content ID obtained from a content matching operation, then the method further comprises the following steps after the IPTV service control entity receives the IPTV service request and before the IPTV service control entity sends the media request to the MRBF:
sending, by the ITPV service control entity, the content description request message to the content description function entity, wherein the content description request message carries a reference ID;
receiving, by the IPTV service control entity, the content description returned from the content description function entity; performing, by the content description function entity, a content matching operation based on the reference ID and returning description of the matched content to the IPTV service control entity, wherein the content description returned to the IPTV service control entity comprises at least a content ID.

15. The method of claim 8, **characterized in that**, the content description comprises a physical access address of the content, the IPTV application subsystem comprises an IPTV service control entity, and the multimedia subsystem comprises a media resource location function entity (MRLF) and a media resource function entity (MRF), and the step for enabling the multimedia delivery subsystem to provide content to the user equipment comprises:
sending, by the IPTV service control entity, a media request message to the MRLF according to the IPTV service request;
sending, by the MRLF, a content description request message to the content description function entity according to the media request message;
returning the content description containing a physical access address to the MRLF according to the content description request message;
locating, by the MRLF, the content according to the returned content description; determining the physical access address of the content; and returning the determined physical access address of the content to the IPTV service control entity;
enabling, by the IPTV service control entity, the MRF to provide content to the user equipment according to the physical access address of the content.

16. The method of claim 15, **characterized in that**, the step of enabling, by the IPTV service control entity, the MRF to provide content to the user equipment according to the physical access address of the content comprises:
sending, by the IPTV service control entity, a media request message to the MRF according to the physical access address of the content, and returning the physical access address of the content to the user equipment via an IMS session procedure; setting up a connection, by the user equipment, with the MRF according to the physical access address of the content and receiving the content provided by the MRF; or
returning, by the IPTV service control entity, the physical access address of the content to the user equipment via an IMS session procedure; sending, by the user equipment, a media request message to the MRF according to the physical access address of the content; setting up a connection with MRF and receiving the content provided by the MRF.

17. The method of claim 15, **characterized in that**, if the IPTV service request sent by the user equipment carries a reference ID, and the media request sent from the IPTV service control entity to the MRLF carries a content ID obtained from a content matching operation, then the method further comprises the following steps after the IPTV service control entity receives the IPTV service request and before the IPTV service control entity sends the IPTV service request to the MRLF:
sending, by the IPTV service control entity, the content description request message to the content description function entity, wherein the content description request message carries the reference ID; performing, by the content description function entity, a content matching operation based on the reference ID and returning description of the matched content to the IPTV service control entity, wherein the content description returned to the IPTV service control entity comprises at least a content ID.

18. The method of claim 8, **characterized in that**, if the content description in the content description function entity comprises content protection description and the IPTV subsystem comprises an IPTV service control entity, then, when the user equipment requires content protection information, the method further comprises:
sending, by the user equipment, a request message for content protection information to the IPTV service control entity; acquiring, by the IPTV service control entity, the content protection description from the content description function entity according to the request message for content protection information; returning the acquired content protection description to the user equipment; and acquiring, by the UE, the content protection information from a content protection function entity based on the content protection description.

19. The method of claim 8, **characterized in that**, if the content description in the content description function entity comprises content protection description and the IPTV subsystem comprises an IPTV service control entity, then, when the user equipment requires content protection information, the method further comprises:
sending, by the user equipment, a request message for content protection information to the IPTV service control entity; acquiring, by the IPTV service control entity, the content protection description from the content description function entity according to the request message for content protection information; acquiring, by the IPTV service control entity, the content protection information from a content protection function entity based on the content protection description; and returning the acquired content protection information to the user equipment.

20. The method of claim 8, **characterized in that**, if the content description in the content description function entity comprises content protection description and the IPTV subsystem comprises an IPTV service control entity, then, when the user equipment requires content protection information, the method further comprises:
receiving, by the IPTV service control entity, a request message for content protection information sent from the user equipment;
forwarding, by the IPTV service control entity, the request message for content protection information to the content description function entity;
returning, by the IPTV service control entity, the content protection information received from the content description function entity, to the user equipment, wherein the content protection information is the information that is acquired by the content description function entity according to the content protection description and the content protection description is determined by the content description function entity according to the request message for content protection information.

21. The method of claim 8, **characterized in that**, if the content description in the content description function entity comprises content protection description and the IPTV subsystem comprises an IPTV service control entity, then, when the user equipment requires content protection information, the method further comprises:
receiving, by the IPTV service control entity, a request message for content protection information sent from the user equipment;
forwarding, by the IPTV service control entity, the request message for content protection information to the content description function entity;
determining, by the content description function entity, corresponding content protection description according to the request message for content protection information; forwarding the request message for content protection information to a content protection function entity according to the content protection description; sending, by the content protection function entity, the content protection information to the user equipment via the IPTV service control entity according to the request message for content protection information; or sending the content protection information directly to the user equipment.

22. The method of claim 8, **characterized in that**, if a system for implementing IPTV service comprises a service deployment function entity, and the content description function entity obtains location information of a content source for a new content and generates a content ID, the method further comprises:
sending, by the content description function entity, the content ID and the location information of the content source of the new content to the service deployment function entity; deploying contents, by the service deployment function entity based on the content ID and the location information of the content source; publishing, by the service deployment function entity, a physical access address obtained after deployment to the content description function entity for storing as the content description.

23. The method of claim 22, **characterized in that**, after the service deployment function entity publishes the physical access address obtained after deployment to the content description function entity, and when there is a need to re-deploy the contents, the method further comprises:
obtaining, by the service deployment function entity, the location information of the content source and the original physical access address from the content description function entity based on the acquired content ID; and re-deploying the content in the multimedia delivery subsystem according to the location information of the content source and the original physical access address; publishing the physical access address obtained after re-deployment to the content description function entity to replace the original physical access address.

24. The method of claim 8, **characterized in that**, when the content description in the content description function entity is updated, the method further comprises:
sending, by the content description function entity, an update notification to a service selection function entity, wherein the update notification carries the updated content description; generating, by the service selection function entity, an electronic program guide (EPG), based on the updated content description and delivering the generated EPG to the user equipment.

25. The method of claim 8, **characterized in that**, if a system for implementing IPTV service comprises a service provision function entity, and the content description comprises media property information, the step of acquiring the media property information by the content description function entity comprises:
publishing, by the content provision function entity, the media property of the content which the content provision function entity stores to the content description function entity; generating, by the content description function entity, a content ID for the content; and storing the content ID together with the media property.

26. The method of claim 8, **characterized in that**, if a system for implementing IPTV service comprises a service protection function entity, and the content description comprises content protection description, the step of acquiring the content protection description by the content description function entity comprises:
publishing, by the content protection function entity, the content protection description to the content description function entity; storing, by the content description function entity, the content protection description.

27. A method for implementing IPTV service, **characterized in** comprising:
receiving, by an IPTV application subsystem, an IPTV service request initiated from a user equipment in an IMS session;
acquiring, by the IPTV application subsystem, content description from a service selection function entity according to the IPTV service request, and enabling a multimedia delivery subsystem to provide content to the user equipment based on the acquired content description so as to implement the IPTV service.

28. The method of claim 27, **characterized in that**, the content description comprises a physical access address of the content, the IPTV application subsystem comprises an IPTV service control entity, and the multimedia subsystem comprises a media control/distribution function entity (MCF/MDF), the step of acquiring, by IPTV application subsystem, the content description from the service selection function entity according to the IPTV service request, and enabling the multimedia delivery subsystem to provide content to the user equipment based on the acquired content description comprises:
sending, by the IPTV service control entity, a content description request message to the service selection function entity based on the IPTV service request from the user equipment;
receiving, by the IPTV service control entity, the content description containing the physical access address which is returned from the service selection function entity based on the content description request message;
locating, by the IPTV service control entity, the content according to the returned content description and determining the physical access address of the content; and
enabling, by the IPTV service control entity, the MCF/MDF to provide content to the user equipment according to the physical access address of the content.

29. The method of claim 28, **characterized in that**, the step of enabling, by the IPTV service control entity, the MCF/MDF to provide content to the user equipment according to the physical access address of the content comprises:
sending, by the IPTV service control entity, a media request message to the MCF/MDF according to the physical access address of the content, and returning, by the IPTV service control entity, the physical access address of the content to the user equipment by virtue of an IMS session procedure; setting up a connection, by the user equipment, with the MCF/MDF according to the physical access address of the content; and receiving, by the user equipment, the content provided by the MCF/MDF; or
returning, by the IPTV service control entity, the physical access address of the content to the user equipment by virtue of an IMS session procedure; sending, by the user equipment, a media request message directly to the MCF/MDF according to the physical access address of the content; setting up a connection, by the user equipment, with MCF/MDF; and receiving, by the user equipment, the content provided by the MCF/MDF.

30. The method of claim 28, **characterized in that**, if the IPTV service request carries a reference ID, the method further comprises the following steps after the IPTV service control entity sends the content description request message to the service selection function entity and before the service selection function entity returns the content description:
performing, by the service selection function entity, a content matching operation according to the reference ID, and using the description of the matched content as the content description to be returned to the IPTV service control entity, wherein the content description returned to the IPTV service control entity contains the physical access address.
